# EUROPÄISCHE PATENTSCHRIFT

(11) **EP 1 099 752 B1**
(45) Veröffentlichungstag und Bekanntmachung des Hinweises auf die Patenterteilung: **24.09.2003**
(21) Anmeldenummer: 00115102.6
(22) Anmeldetag: 12.07.2000
(51) Int. Cl.: C12G 3/04

(54) **Cocktail auf der Basis von Branntwein mit Anisgeschmack (Ouzo)**
Cocktail containing aniseed flavoured brandy (Ouzo)
Cocktail contenant de l'eau-de-vie du goût d'anis (Ouzo)

(30) Priorität: 13.11.1999 DE 19936431
(43) Veröffentlichungstag der Anmeldung: 16.05.2001
(73) Patentinhaber: Georgolopoulos, Costa, 30900 Wedemark (DE)
(72) Erfinder: Georgolopoulos, Costa, 30900 Wedemark (DE)
(74) Vertreter: König, Norbert, Dipl.-Phys. Dr.

(56) Entgegenhaltungen:
- EP-A- 0 181 190
- DE-C- 4 230 391
- DATABASE WPI Section Ch, Week 199845 Derwent Publications Ltd., London, GB; Class D16, AN 1998-529800 XP002160290 & RU 2 107 720 C (KASIMOVSK LIQUEUR VODKA WKS STOCK CO), 27. März 1998 (1998-03-27)

## Beschreibung

Die Erfindung betrifft einen Cocktail auf der Basis von Branntwein mit Anisgeschmack.

Cocktails auf der Basis von Branntwein mit Anisgeschmack, bspw. auf der Basis von sog. Anisschnäpsen, wie bspw. Pernod, sind bei vielen Personen wegen des ausgeprägten Anisgeschmacks nicht sehr beliebt.

Die Aufgabe der vorliegenden Erfindung besteht deshalb darin, einen neuartigen Cocktail auf der Basis von Branntwein mit Anisgeschmack anzugeben, welcher geschmacklich so verbessert ist, daß er dem Geschmack vieler Menschen entspricht.

Diese Aufgabe wird durch die Erfindung gemäß Anspruch 1 gelöst.

Vorteilhafte und zweckmäßige Weiterbildungen sind in den Unteransprüchen angegeben.

Zwei besondere Rezepturen mit ausgesprochen abgerundetem und angenehmem Geschmack sind in den Ansprüchen 10 und 11 angegeben.

Die Erfindung schlägt für den Cocktail eine Mischung aus Branntwein mit Anisgeschmack, Likörwein, Wein, Bananenlikör und Wasser, ggf. noch mit einem geringen Zusatz von Curaçao vor. Überraschenderweise hat sich dabei herausgestellt, daß dieser auf diese Weise erhaltene Cocktail einen sehr abgerundeten, milden fruchtigen Geschmack hat, der den Geschmack vieler trifft.

Nachfolgend soll die Erfindung anhand der Angabe einer allgemeinen Rezeptur und zweier spezieller Rezepturen näher beschrieben werden.

Allgemeine Rezeptur:

Es werden folgende Zutaten verwendet:

| | |
|---|---|
| 25,2 Vol.-%-30,8 Vol.-% | Branntwein mit Anisgeschmack |
| 31,4 Vol.-%-18,4 Vol.-% | Likörwein |
| 11,9 Vol.-%-19,5 Vol.-% | Wein |
| 8,7 Vol.-%-13 Vol.-% | Bananenlikör |
| 0 Vol.-%- 3,2 Vol.-% | Curaçao |
| 22,8 Vol.-%-15,1 Vol.-% | Wasser |

Als Branntwein mit Anisgeschmack hat sich als besonders geeignet erwiesen der griechische Anisbranntwein "Ouzo" mit einem Alkoholgehalt von 35-50 Vol.-%, vorzugsweise 38 Vol.-%, Likörwein, hier insbes. die Likörweine Muscato und Marvodafne mit 11-16 Vol.-% Alkohol, vorzugsweise 15 Vol.-% Alkohol, Weißwein oder Rotwein mit einem Alkoholgehalt von 10-13 Vol.-%, gelber oder grüner Bananenlikör mit 18-30 Vol.-% Alkohol, evtl. etwas Curaçao-Likör mit 30-40 Vol.-% Alkohol, vorzugsweise 30 Vol.-% Alkohol und Wasser.

Als Cocktails mit besonders angenehmem fruchtigen, abgerundeten Geschmack haben sich die nachfolgenden beiden Cocktailrezepte herausgestellt:

### 1. Rezept:

| | |
|---|---|
| 27,9 Vol.-% | Ouzo (38 Vol.-% Alkohol) |
| 21,7 Vol.-% | Likörwein Muscato (15 Vol.-% Alkohol) |
| 17,9 Vol.-% | Rotwein (12 Vol.-% Alkohol) |
| 10,8 Vol.-% | gelber Bananenlikör (28 Vol.-% Alkohol) |
| 4,3 Vol.-% | Likörwein Marvodafne (15 Vol.-% Alkohol) |
| 17,4 Vol.-% | Wasser |

Dieser Cocktail gemäß Rezept 1 weist eine rote Farbe auf.

### Rezept 2:

| | |
|---|---|
| 27 Vol.-% | Ouzo (38 Vol-% Alkohol) |
| 24,4 Vol.-% | Likörwein Muscato (15 Vol.-% Alkohol) |
| 13,5 Vol.-% | Weißwein (11 Vol.-% Alkohol) |
| 10,8 Vol.-% | grüner Bananenlikör (20 Vol.-% Alkohol) |
| 2,7 Vol.-% | Curaçao-Likör (30 Vol.-% Alkohol) |
| 21,6 Vol.-% | Wasser. |

Dieser Cocktail gemäß Rezeptur 2 weist eine grüne Farbe auf.

## Patentansprüche

1. Cocktail auf der Basis von Branntwein mit Anisgeschmack mit folgender Rezeptur:
| | |
|---|---|
| 25,2 Vol.-%-30,8 Vol.-% | Branntwein mit Anisgeschmack |
| 31,4 Vol.-%-18,4 Vol.-% | Likörwein |
| 11,9 Vol.-%-19,5 Vol.-% | Wein |
| 8,7 Vol.-%-13 Vol.-% | Bananenlikör |
| 0 Vol.-%- 3,2 Vol.-% | Curaçao |
| 22,8 Vol.-%-15,1 Vol.-% | Wasser |

2. Cocktail nach Anspruch 1, **dadurch gekennzeichnet, daß** der Branntwein mit Anisgeschmack griechischer Anisbranntwein Ouzo mit einem Alkoholgehalt von 35-50 Vol.-% ist.

3. Cocktail nach Anspruch 2, **dadurch gekennzeichnet, daß** der Alkoholgehalt des Anisbranntweins Ouzo 38 Vol.-% beträgt.

4. Cocktail nach Anspruch 1, **dadurch gekennzeichnet, daß** als Likörwein die griechischen Likörweine Muscato und/oder Marvodafne mit einem Alkoholgehalt von 11-16 Vol.-% gewählt werden.

5. Cocktail nach Anspruch 4, **dadurch gekennzeichnet, daß** der Alkoholgehalt der Likörweine 15 Vol.-% beträgt.

6. Cocktail nach Anspruch 1, **dadurch gekennzeichnet, daß** der Weißwein oder Rotwein einen Alkoholgehalt von 10-13 Vol.-% aufweist.

7. Cocktail nach Anspruch 1, **dadurch gekennzeichnet, daß** gelber oder grüner Bananenlikör mit einem Alkoholgehalt von 18-30 Vol.-% verwendet wird.

8. Cocktail nach Anspruch 7, **dadurch gekennzeichnet, daß** der gelbe Bananenlikör einen Alkoholgehalt von 28 Vol.-% und der grüne Bananenlikör einen Alkoholgehalt von 20 Vol.-% aufweist.

9. Cocktail nach Anspruch 1, **dadurch gekennzeichnet, daß** der Curaçao-Likör einen Alkoholgehalt von 30-40 Vol.-%, vorzugsweise 30 Vol.-% aufweist.

10. Cocktail nach Anspruch 1, **gekennzeichnet durch** folgende spezielle Rezeptur:
| | |
|---|---|
| 27,9 Vol.-% | Ouzo (38 Vol.-% Alkohol) |
| 21,7 Vol.-% | Likörwein Muscato (15 Vol.-% Alkohol) |
| 17,9 Vol.-% | Rotwein (12 Vol.-% Alkohol) |
| 10,8 Vol.-% | gelber Bananenlikör (28 Vol.-% Alkohol) |
| 4,3 Vol.-% | Likörwein Marvodafne (15 Vol.-% Alkohol) |
| 17,4 Vol.-% | Wasser |

11. Cocktail nach Anspruch 1 **gekennzeichnet durch** folgende spezielle Rezeptur:
| | |
|---|---|
| 27 Vol.-% | Ouzo (38 Vol-% Alkohol) |
| 24,4 Vol.-% | Likörwein Muscato (15 Vol.-% Alkohol) |
| 13,5 Vol.-% | Weißwein (11 Vol.-% Alkohol) |
| 10,8 Vol.-% | grüner Bananenlikör (20 Vol.-% Alkohol) |
| 2,7 Vol.-% | Curaçao-Likör (30 Vol.-% Alkohol) |
| 21,6 Vol.-% | Wasser. |

## Claims

1. Cocktail containing aniseed flavoured brandy with the following dispensing:
| | |
|---|---|
| 25.2 vol.-%-30.8 vol.-% | aniseed flavoured brandy |
| 31.4 vol.-%-18.4 vol.-% | liqueur wine |
| 11.9 vol.-%-19.5 vol.% | wine |
| 8.7 vol.-%-13 vol.% | banana liqueur |
| 0 vol.-%- 3,2 vol.-% | Curaçao |
| 22,8 vol.-%-15.1 vol.-% | water |

2. Cocktail according to claim 1, **characterized in that** the aniseed flavoured brandy is Greek aniseed brandy Ouzo with an alcohol content of 35-50 vol.-%.

3. Cocktail according to claim 2, **characterized in that** the alcohol content of the aniseed brandy Ouzo amounts to 38 vol.-%.

4. Cocktail according to claim 1, **characterized in that** the Greek liqueur wines Muscato and/or Marvodafne with an alcohol content of 11-16 vol.-% are selected as liqueur wines.

5. Cocktail according to claim 4, **characterized in that** the alcohol content of the liqueur wines amounts to 15 vol.-%.

6. Cocktail according to claim 1, **characterized in that** the white wine or red wine has an alcohol content of 10-13 vol.-%.

7. Cocktail according to claim 1, **characterized in that** yellow or green banana liqueur with an alcohol content of 18-30 vol.-% is used.

8. Cocktail according to claim 7, **characterized in that** the yellow banana liqueur has an alcohol content of 28 vol.-% and the green banana liqueur has an alcohol content of 20 vol.-%.

9. Cocktail according to claim 1, **characterized in that** the Curaçao-liqueur has an alcohol content of 30-40 vol.-%, preferably 30 vol.-%.

10. Cocktail according to claim 1, **characterized by** the following special dispensing:
| | |
|---|---|
| 27.9 vol.-% | ouzo (38 vol.-% alcohol) |
| 21.7 vol.-% | liqueur wine Muscato (15 vol.-% alcohol) |
| 17.9 vol.-% | red wine (12 vol.-% alcohol) |
| 10,8 vol.-% | yellow banana liqueur (28 vol.-% alcohol) |
| 4.3 vol.-% | liqueur wine Marvodafne (15 vol.-% alcohol) |
| 17.4 vol.-% | water |

11. Cocktail according to claim 1, **characterized by** the following special dispensing:
| | |
|---|---|
| 27 vol.-% | Ouzo (38 vol.-% alcohol) |
| 24.4 vol.-% | liqueur wine Muscato (15 vol.-% alcohol) |
| 13.5 vol.-% | white wine (11 vol.-% alcohol) |
| 10.8 vol.-% | green banana liqueur (20 vol.-% alcohol) |
| 2.7 vol.-% | Curaçao-liqueur (30 vol.-% alcohol) |
| 21.6 vol.-% | water. |

## Revendications

1. Cocktail sur base d'eau-de-vie au goût d'anis selon la composition suivante:
| | |
|---|---|
| 25,2 vol -% - 30,8 vol -% | d'eau-de-vie au goût d'anis |
| 31,4 vol -% - 18,4 vol -% | de vin liqueur |
| 11,9 vol -% - 19,5 vol -% | de vin |
| 8,7 vol -% - 13 vol -% | de liqueur de banane |
| 0 vol -% - 3,2 vol -% | de curaçao |
| 22,8 vol -% - 15,1 vol -% | d'eau |

2. Cocktail selon spécification 1, **caractérisé** du fait que l'eau-de-vie au goût d'anis est bien de l'Ouzo, eau-de-vie grecque à l'anis, ayant une teneur de 35 à 50 vol -% d'alcool.

3. Cocktail selon spécification 2, **caractéris**é du fait que la teneur en alcool de l'eau-de-vie à l'anis, Ouzo, s'élève à 38 vol -%.

4. Cocktail selon spécification 1, **caractérisé** du fait que les vins liqueurs grecs Muscato et/ou Marvodafine contenant un taux d'alcool de 11 à 16 vol -% ont été sélectionnés comme vin liqueur.

5. Cocktail selon spécification 4, **caractérisé** du fait que la teneur en alcool des vins liqueurs s'élève à 15 vol -%.

6. Cocktail selon spécification 1, **caractérisé** du fait que le vin blanc ou le vin rouge accuse une teneur en alcool de 10 à 13 vol -%.

7. Cocktail selon spécification 1, **caractérisé** du fait qu'une liqueur jaune ou verte de banane ayant une teneur en alcool de 18 à 30 vol -% y est utilisée.

8. Cocktail selon spécification 7, **caractéris**é du fait que la liqueur jaune de banane accuse un taux d'alcool de 28 vol -% et la liqueur verte de banane une teneur en alcool de 20 vol -%.

9. Cocktail selon spécification 1, **caractérisé** du fait que la liqueur de curaçao accuse une teneur en alcool de 30 à 40 vol -%, de préférence 30 vol -%.

10. Cocktail selon spécification 1, **caractérisé par** la recette spéciale suivante:
| | |
|---|---|
| 27,9 vol -% | Ouzo (38 vol-% d'alcool) |
| 21,7 vol -% | de vin liqueur Muscato (15 vol -% d'alcool) |
| 17,9 vol -% | de vin rouge (12 vol -% d'alcool) |
| 10,8 vol -% | de liqueur jaune de banane (28 vol -% d'alcool) |
| 4,3 vol -% | de vin liqueur Marvodafhe (15 vol -% d'alcool) |
| 14,7 vol -% | d'eau |

11. Cocktail selon spécification 1, **caractérisé par** la recette spéciale suivante:
| | |
|---|---|
| 27 vol -% | d'Ouzo (38 vol -% d'alcool) |
| 24,4 vol -% - | de vin liqueur Muscato (15 vol -% d'alcool) |
| 13,5 vol -% | de vin blanc (11 vol -% d'alcool) |
| 10,8 vol -% | de liqueur verte de banane (20 vol -% d'alcool) |
| 2,7 vol -% | de liqueur Curaçao (30 vol -% d'alcool) |
| 21,6 vol -% | d'eau |
